# EUROPÄISCHE PATENTANMELDUNG

(11) **EP 3 103 743 A1**
(43) Veröffentlichungstag der Anmeldung: **14.12.2016**
(21) Anmeldenummer: 15171912.7
(22) Anmeldetag: 12.06.2015
(51) Int. Cl.: B65G 47/61, B65G 9/00, B65G 47/36

(54) **VORRICHTUNG ZUM PLATZSPARENDEN ANORDNEN VON KLEIDERBÜGELN**

(71) Anmelder: Polypack GmbH & Co. KG Verpackungsmaschinen, 33818 Leopoldshöhe (DE)
(72) Erfinder: Müller, Matthias, 32257 Bünde (DE)
(74) Vertreter: Kleine, Hubertus

(57) **Zusammenfassung**

Die Erfindung betrifft eine Vorrichtung zum platzsparenden Anordnen einer Gruppe von Kleiderbügeln zur Aufnahme von hängend lagernden Kleidungsstücken, wobei die Kleiderbügel mit einer Verbindungsklammer zusammengefasst sind. Die Vorrichtung weist eine erste Gleitstange zum Zuführen der Gruppe von Kleiderbügeln auf, wobei jeder der Kleiderbügel mit einem Hakenabschnitt auf der ersten Gleitstange geführt ist, und eine sich an die erste Gleitstange anschließende zweite Gleitstange zum Abführen der Gruppe der Kleiderbügel Dabei ist zumindest eine der Gleitstangenrelativ zur anderen der Gleitstangen bewegbar gelagert, so dass ein Spalt zwischen der ersten Gleitstange und der zweiten Gleitstangegebildet werden kann. Die Vorrichtung ist dazu eingerichtet, von der Gruppe von Kleiderbügeln einen ersten Kleiderbügel von der ersten Gleitstange auf die zweite Gleitstange zu überführen und die weiteren Kleiderbügel der Gruppe in den Spalt zwischen der ersten und der zweiten Gleitstange freizugeben.

## Beschreibung

Die Erfindung betrifft eine Vorrichtung zum platzsparenden Anordnen einer Gruppe von Kleiderbügeln zur Aufnahme von hängend lagernden Kleidungsstücken, wobei die Kleiderbügel mit einer Verbindungsklammer zusammengefasst sind.

Kleidungsstücke, insbesondere für die Oberbekleidung, werden nach der Produktion häufig auf Kleiderbügeln hängend gelagert und versandt. Mehrere, beispielsweise zwei bis fünf, der einzeln auf Kleiderbügeln hängenden Kleiderstücke werden dabei in der Regel zu einer Gruppe zusammengefasst und die Gruppe gemeinsam für die Lagerung oder den Transport durch eine dünne, übergestülpte Kunststofffolie geschützt. Das Zusammenfassen zu einer Gruppe erfolgt dabei über ein Verbinden der einzelnen Kleiderbügel.

Aus der Druckschrift DE 201 05 067 U2 ist eine Verbindungsklammer zum Verbinden von Kleiderbügeln bekannt, die in Form eines Kamms mit mehreren Zinken und dazwischen liegenden Aussparungen ausgebildet ist. Von den Zinken aus ragen Widerhaken in die Aussparungen. Die Verbindungsklammer kann auf einfache Weise quer liegend auf die Hälse der Kleiderbügel aufgedrückt werden. Die Hälse der Kleiderbügel werden von den Aussparungen aufgenommen und durch die Widerhaken in den Aussparungen zwischen den Zinken fixiert. Die Widerhaken können so ausgebildet sein, dass bei entsprechender Kraftanwendung die Kleiderbügel zerstörungsfrei wieder von der Verbindungsklammer gelöst werden können und die Verbindungsklammer wiederverwendet werden kann. Die Verbindungsklammer lässt sich auch maschinell auf eine Gruppe von Kleiderbügeln aufsetzen und ermöglicht so ein automatisiertes Zusammenfassen und Verbinden von mehreren Kleiderbügeln.

Gegenüber einzeln verpackten Kleidungsstücken führen die zu Gruppen zusammengefassten Kleidungsstücke zu einer deutlichen Einsparung an Verpackungsmaterial. Dünnes Verpackungsmaterial vorausgesetzt ergibt sich durch das Zusammenfassen mit den zuvor beschriebenen Verbindungsklammern jedoch keine Platzersparnis bei der Lagerung und dem Transport der Kleidungsstücke.

Es ist eine Aufgabe der vorliegenden Erfindung, eine Vorrichtung anzugeben, die eine Gruppe von Kleiderbügeln, die mit einer Verbindungsklammer zusammengefasst und miteinander verbunden sind, so anzuordnen, dass sich eine Platzersparnis bei der Lagerung und dem Transport der Kleidungsstücke gegenüber einer Anordnung ergibt, bei der nebeneinander hängende Kleiderbügel durch die Verbindungsklammer gruppiert sind.

Diese Aufgabe wird gelöst durch eine Vorrichtung mit den Merkmalen des unabhängigen Anspruchs. Vorteilhafte Ausgestaltungen und Weiterbildungen sind in den abhängigen Ansprüchen angegeben.

Eine erfindungsgemäße Vorrichtung der eingangs genannten Art weist eine erste Gleitstange zum Zuführen der Gruppe von Kleiderbügeln auf, wobei jeder der Kleiderbügel mit einem Hakenabschnitt auf der ersten Gleitstange geführt ist und wobei die Gruppe der Kleiderbügel durch eine Verbindungsklammer miteinander verbunden sind. An die erste Gleitstange schließt sich eine zweite Gleitstange zum Abführen der Gruppe der Kleiderbügel an. Dabei ist zumindest eine der Gleitstange relativ zur anderen Gleitstange bewegbar gelagert, so dass ein Spalt zwischen der ersten Gleitstange und der zweiten Gleitstange gebildet werden kann. Die Vorrichtung ist dazu eingerichtet, von der Gruppe von Kleiderbügeln einen ersten Kleiderbügel von der ersten Gleitstange auf die zweite Gleitstange zu überführen und die weiteren Kleiderbügel in den Spalt zwischen der ersten und der zweiten Gleitstange freizugeben.

Der erfindungsgemäßen Vorrichtung wird somit eine Gruppe von Kleiderbügeln zugeführt, bei der jeder der Bügel einzeln auf der ersten Gleitstange geführt ist. In dieser Anordnung hängen die Kleiderbügel folglich im Wesentlichen nebeneinander, beabstandet durch die sie verbindende Verbindungsklammer.

Beim Übertragen der Gruppe von Kleiderbügeln auf die zweite, abführende Gleitstange wird nur der erste Kleiderbügel auf die zweite Gleitstange übertragen und die weiteren Kleiderbügel durch Bilden des Spalts zwischen den beiden Gleitstangen von der Gleitstange in den Spalt rutschen zu lassen und damit freizugeben.

Die gesamte Gruppe der Kleiderbügel und entsprechend Kleidungsstücke hängt dann - gekoppelt über die Verbindungsklammer - lediglich an dem ersten Kleiderbügel. Als Folge verkippt die zuvor parallel zu den Gleitstangen ausgerichtete Verbindungsklammer in eine schräge Lage. Die Verbindungsklammer rutscht am Hals des ersten Kleiderbügels hinab, bis sie auf dessen Schultern aufliegt. Die nicht mehr von den Gleitstangen unterstützen weiteren Kleiderbügel rutschen in der Verbindungsklammer herunter, bis sie mit einem jeweiligen Hakenabschnitt von der Verbindungsklammer aufgefangen werden. Das Verkippen der Verbindungsklammer führt dazu, dass sich die Kleidungsstücke flach aufeinander legen.

Die Kleiderbügel ordnen sich entsprechend kaskadenartig und höhenversetzt übereinander an. Durch diese Anordnung wird die Gruppe der Kleidungsstücke flacher und benötigt weniger Platz bei der Lagerung und dem Transport.

Es wird darauf hingewiesen, dass der erste Kleiderbügel in Bewegungsrichtung der Gruppe der Kleiderbügel sowohl vorne, als auch hinten angeordnet sein kann. Die erste und/oder die zweite Gleitstange verlaufen bevorzugt horizontal geneigt, so dass eine Bewegung der Kleiderbügel in dem Bereich der Vorrichtung rein passiv durch Schwerkraft erfolgt.

In einer vorteilhaften Ausgestaltung der Vorrichtung ist die erste Gleitstange gegenüber der zweiten Gleitstange bewegbar, insbesondere verschiebbar. Durch eine Bewegung der beiden Gleitstangen zueinander kann auf mechanisch einfache Weise der genannte Spalt gebildet werden, in den mit Ausnahme des ersten alle weiteren Kleiderbügel fallen. Die Bewegung der der beiden Gleitstangen zueinander kann beispielsweise durch einen Pneumatikzylinder erfolgen, der mit der der ersten Gleitstange gekoppelt ist.

In einer weiteren vorteilhaften Ausgestaltung der Vorrichtung ist am Übergang zwischen der ersten und der zweiten Gleitstange eine Stufe vorgesehen, wobei zwischen den Gleitstangen ein Heber angeordnet ist, um den Kleiderbügel von der ersten Gleitstange auf die zweite Gleitstange zu heben. Bevorzugt ist der Heber dabei ein von einem Aktor, bevorzugt einem weiteren Pneumatikzylinder, bewegbarer Haken.

Beim Betrieb der Vorrichtung ist sicherzustellen, dass die weiteren Kleiderbügel erst dann fallengelassen werden, wenn sich der erste Kleiderbügel auf der zweiten Gleitstange befindet. Der Heber ermöglicht hierbei ein robust ablaufendes Verfahren. Die Gruppe von Kleiderbügeln rutscht - in diesem Fall mit dem ersten Kleiderbügel voran - über die erste Gleitstange. Sobald der erste Kleiderbügel im Bereich des Hebers ist, wird dieser durch Betätigung des weiteren Pneumatikzylinders bewegt und der erste Kleiderbügel auf die zweite Gleitstange angehoben. Insbesondere wenn der Heber als Haken geformt ist, laufen die nachfolgenden Kleiderbügel dann gegen eine Außenseite des Hakens, wodurch verhindert wird, dass auch die nachfolgenden Kleiderbügel auf die zweite Gleitstange gelangen. Der Heber wirkt so zusätzlich als Anschlag bzw. Stopper für die weiteren Kleiderbügel. Anschließend kann der Spalt zwischen den Gleitstangen gebildet werden, um die weiteren Kleiderbügel fallen zu lassen.

Bevorzugt ist im Bereich der ersten Gleitstange ein Sensor vorgesehen, beispielsweise eine Kamera, um ein Anliegen oder Annähern des ersten Kleiderbügels an dem Heber zu detektieren. Die Vorrichtung weist dann bevorzugt eine Steuereinrichtung auf, die den Sensor auswertet und eine Bewegung des Hebers und eine Bildung des Spalts koordiniert. Hierzu kann die Steuereinrichtung den mit der Gleitstange gekoppelten Pneumatikzylinder und den mit dem Heber gekoppelten weiteren Pneumatikzylinder über entsprechende Ventile ansteuern.

Die Erfindung wird nachfolgend anhand eines Ausführungsbeispiels mithilfe von Figuren näher erläutert. Die Figuren zeigen:
- Fig.1: eine schematische Übersichtsdarstellung einer Anordnung zum Gruppieren und Anordnen von Kleiderbügeln;
- Fig. 2a, 2b: eine zur Verwendung in der Anordnung der Fig.1 geeignete Verbindungsklammer zum Zusammenfassen und Verbinden von Kleiderbügeln in zwei verschiedenen Ansichten; und
- Fig.3a-3d: jeweils eine schematische Seitenansicht einer Vorrichtung zum platzsparenden Anordnen der Gruppe von Kleiderbügeln in verschiedenen Betriebszuständen.

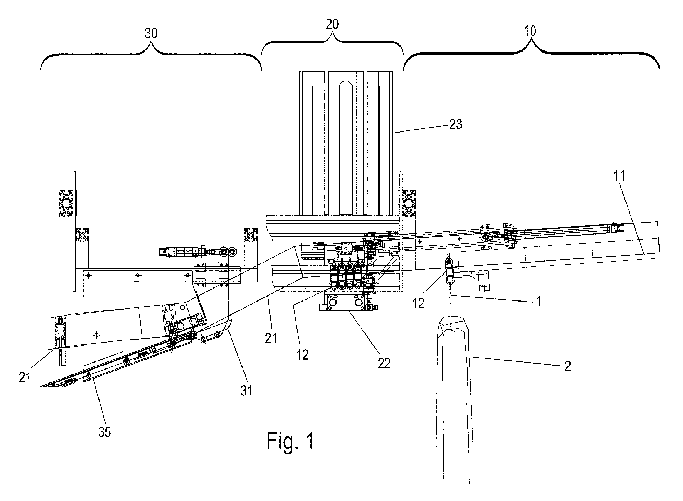

Fig. 1 zeigt in einer Seitenansicht eine schematische Darstellung einer Maschinenanordnung zum Gruppieren und platzsparenden Anordnen von Kleiderbügeln. Die Maschinenanordnung weist drei Funktionsabschnitte auf, eine Zuführungseinrichtung 10, eine Gruppierungseinrichtung 20 und eine anmeldungsgemäße Vorrichtung 30 zum platzsparenden Anordnen der Kleiderbügel.

Von der Zuführungseinrichtung 10 werden Kleiderbügel 1, die jeweils ein Kleidungsstück 2 tragen, einzeln zugeführt. Die Zuführungseinrichtung 10 weist dazu eine Führungsbahn 11 auf, an der Rollenträger 12 geführt werden. An einem unteren, freien Ende der Rollenträger 12 ist eine Öse ausgebildet, in die jeweils ein Kleiderbügel 1 eingehängt ist. In dem dargestellten Ausführungsbeispiel verläuft die Führungsbahn 11 leicht schräg geneigt, sodass die Rollenträger 12 mit eingehängtem Kleiderbügel 1 ohne eine aktive Transporteinrichtung entlang der Führungsbahn 11 zu der sich anschließenden Gruppierungseinrichtung 20 rollen. Es versteht sich, dass in alternativen Ausgestaltungen eine andere als eine Rollenführung zum Zuführen der einzelnen Kleiderbügel 1 verwendet werden kann. Weiter alternativ kann auch ein aktiver Transport der Kleiderbügel 1 bei der Führungseinrichtung vorgesehen sein.

Die Führungsbahn 11 der Zuführungseinrichtung 10 ist bis in den Bereich der Gruppierungseinrichtung 20 weitergeführt. In diesem Bereich kann ein Anschlag in die Führungsbahn 11 hineingefahren werden, der einrollende Rollenträger 12 stoppt. Es ist eine Zählvorrichtung vorhanden, durch die jeweils eine vorgegebene Anzahl, hier beispielhaft vier, der hereinrollenden Rollenträger 12 abgezählt werden.

Diese vorgegebene Anzahl von Rollenträgern 12 läuft am Anschlag aufeinander auf, wie beispielhaft mit vier Rollenträgern 12 in der Fig. 1 dargestellt ist. Aus Gründen der Übersichtlichkeit sind diese vier Rollenträger 12 im Bereich der Gruppierungseinrichtung 20 ohne eingehängte Kleiderbügel 1 dargestellt. Bis die vorgegebene Anzahl von aufgelaufenen Rollenträgern 12 weiter prozessiert ist, verhindert ein weiterer Anschlag, der der Gruppierungseinrichtung 20 vorgelagert ist, die Zufuhr von weiteren Rollenträgern 12 mit Kleiderbügeln 1.

Unterhalb der aufgelaufenen Rollenträger 12 ist in der Gruppierungseinrichtung 20 ein Applikator 22 für Verbindungsklammern angeordnet. Der Applikator 22 drückt jeweils eine Verbindungsklammer auf die an den aufgelaufenen Rollenträgern 12 hängenden Kleiderbügel 1 auf und verbindet diese somit zu einer Gruppe von Kleiderbügeln. Der Applikator 22 weist zu diesem Zweck einen Ausgabeschacht für flache, leistenförmige Verbindungsklammern auf, der in etwa der Höhe von Hälsen der Kleiderbügel 1 angeordnet ist. Im oberen Bereich der Gruppierungseinrichtung 20 ist ein Magazin 23 vorgesehen, das eine Mehrzahl von entsprechenden Verbindungsklammern bevorratet.

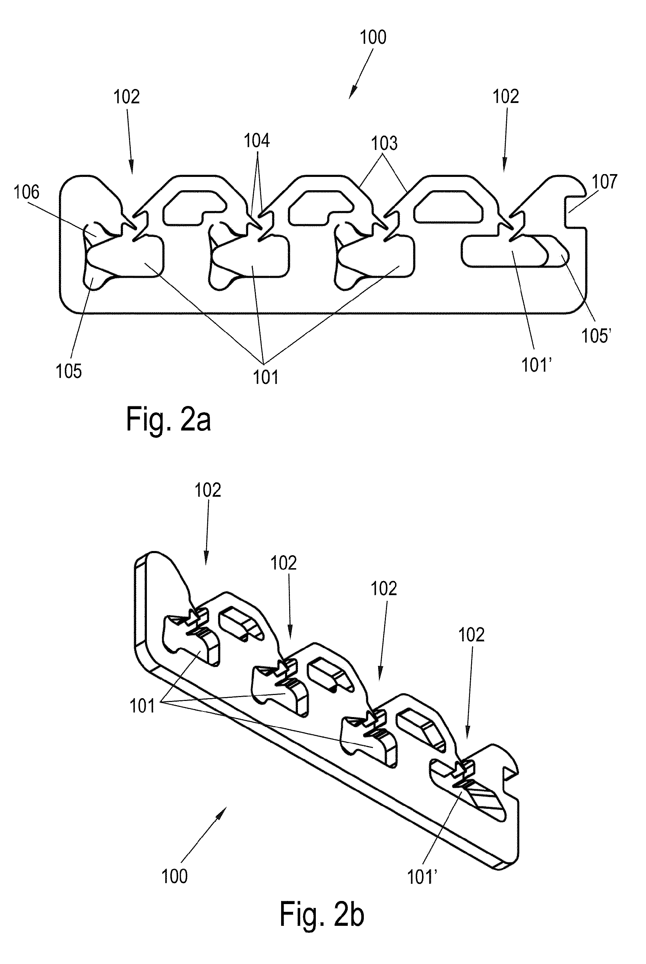

Die Fig. 2a und 2b zeigen beispielhaft eine für diesen Zweck geeignete Verbindungsklammer 100. In Fig. 2a ist eine Draufsicht auf eine Oberseite der Verbindungsklammer 100 dargestellt und in Fig. 2b eine isometrische Schrägansicht.

Die Verbindungsklammer 100 weist im dargestellten Ausführungsbeispiel die Grundform eines länglichen, flachen Leistenabschnitts auf. Sie ist aus einem zumindest in gewissem Maße flexiblen Kunststoffmaterial einstückig hergestellt, bevorzugt in einem Kunststoffspritzgussprozess.

In der Verbindungsklammer 100 sind in einer Längsrichtung hintereinander angeordnet mehrere Aussparungen 101, 101' angeordnet. Die Aussparungen 101, 101' sind jeweils länglich ausgebildet, wobei sich die eine längere Seite der Aussparungen in Längsrichtung des Kamms 100 erstreckt. Im Hinblick auf ihre Form unterscheidet sich die in den Fig. 2a, 2b jeweils rechts angeordnete und einer der Querseiten des Kamms 100 benachbarte Aussparung 101' von den weiteren Aussparungen 101. Diese Aussparung 101' wird nachfolgend auch als erste Aussparung 101' und die Aussparungen 101 als weitere Aussparungen 101 bezeichnet.

Jede der Aussparungen 101, 101' ist zur Aufnahme eines Halsabschnitts eines Kleiderbügels vorgesehen. Um den Kleiderbügel einführen zu können, ohne ihn mit seinem Hakenabschnitt durch die Aussparung 101, 101' zu fädeln, ist von jeder der Aussparungen 101, 101' ein zu einer Längsseite der Verbindungsklammer 100 offener Kanal 102 ausgebildet. Nach außen hin weitet sich der Kanal 102 auf, sodass jeweils eine trichterförmige Aufweitung 103 gebildet ist. Durch die trichterförmige Aufweitung 103 wird erreicht, dass auch ein nicht exakt positionierter Kleiderbügel beim Aufsetzen der Verbindungsklammer 100 in den Kanal 102 geführt wird.

Im Kanal 102 sind Widerhaken 103, vorliegend beispielhaft je drei Widerhaken 104 angeordnet, die so flexibel sind, dass ein Einführen eines Kleiderbügels in die Aussparung 101, 101' leicht, ein Herausgleiten des Kleiderbügels aus den Aussparungen 101, 101' jedoch nur mit erhöhtem Kraftaufwand möglich ist. Die Widerhaken 104 verhindern damit ein unbeabsichtigtes Herausrutschen eines in eine Aussparung 101, 101' eingeführten Kleiderbügels.

Die mit der Verbindungsklammer 100 verbundene Gruppe von Kleiderbügeln 1 wird anschließend von der Gruppierungseinrichtung 20 freigegeben und rollt auf einer ausgehenden Trägerbahn 21 in Richtung der Vorrichtung 30.

Die Vorrichtung 30 weist eine in die Bahn der Kleiderbügel 1 hineinragende erste Gleitstange 31 auf. Diese erste Gleitstange 31 hebt die Kleiderbügel an ihren hakenförmigen Abschnitten aus den Ösen der Rollenträger heraus und trennt so die Gruppe der Kleiderbügel 1 von den Rollenträgern 12. Die Rollenträger verlassen die dargestellte Anordnung über die ausgehende Führungsbahn 21 und werden auf hier nicht dargestellte Weise wieder zurück zum Beginn des dargestellten Prozesses geführt.

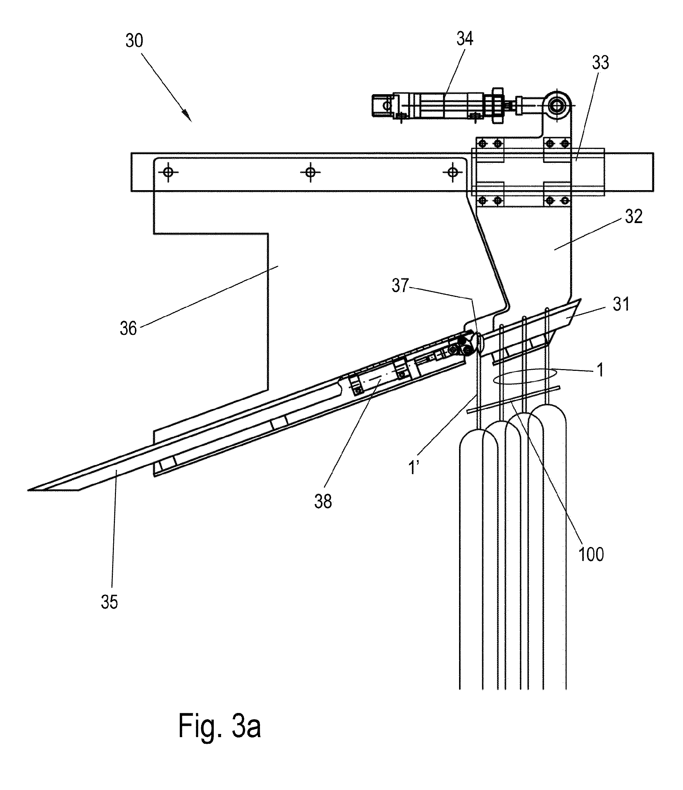

Die Gruppe der Kleiderbügel 1 wird innerhalb der Vorrichtung 30 platzsparend angeordnet und verlässt die Vorrichtung 30 über eine zweite Gleitstange 35. Der Aufbau und die Funktion der Vorrichtung 30 wird nachfolgend im Zusammenhang mit den Figuren 3a-3d näher erläutert.

Die Figuren 3a-3d zeigen jeweils in einer detaillierteren Seitenansicht die anmeldungsgemäße Vorrichtung 30 in verschiedenen Betriebszuständen des Verarbeitens einer Gruppe von Kleiderbügeln.

Die Gruppe der Kleiderbügel weist beispielhaft vier Kleiderbügel 1 auf, die über eine Verbindungsklammer 100, insbesondere ausgebildet gemäß Fig.2, miteinander verbunden sind. Der in Bewegungsrichtung der Gruppe vordere Kleiderbügel ist durch das Bezugszeichen 1' gekennzeichnet. Er wird im Folgenden auch als erste Kleiderbügel 1' bezeichnet, wohingegen die nachfolgenden Kleiderbügel als weitere Kleiderbügel 1 bezeichnet werden. Bei Verwendung der Verbindungsklammer 100 gemäß Fig. 2 ist der erste Kleiderbügel 1' in der ersten Aussparung 101' aufgenommen und die weiteren Kleiderbügel 1 in den weiteren Aussparungen 101.

Die Vorrichtung 30 weist die bereits im Zusammenhang mit Fig.1 erwähnte erste Gleitstange 31 auf, die von einer Trägerplatte 2 schräg angeordnet gehalten wird. Die Trägerplatte 32 ist durch eine Führung 33 horizontal verschiebbar gelagert. Zur Bewegung der ersten Gleitstange 31 ist ein Pneumatikzylinder 34 mit der verschiebbaren Trägerplatte 32 gekoppelt.

Die zweite Gleitstange 35 schließt sich mit gleicher Steigung jedoch geringfügig nach oben höhenversetzt an die erste Gleitstange 31 an. Die zweite Gleitstange 35 ist über eine Trägerplatte 36 fest montiert. Im Übergangsbereich zwischen der ersten Gleitstange 31 und der zweiten Gleitstange 35 ist ein hakenförmiger Heber 37 angeordnet, der mittels eines weiteren Pneumatikzylinders 38 nach oben verschwenkt werden kann.

Fig. 3a zeigt zunächst einen Betriebszustand der Vorrichtung 30, bei dem die erste Gleitstange 31 möglichst nah an der zweiten Gleitstange 35 positioniert ist. Der Heber 37 befindet sich in einem abgesenkten Zustand.

Die Gruppe von Kleiderbügeln 1, 1' rutscht mit dem ersten Kleiderbügel 1' voran über die erste Gleitstange 31. Im Bereich der ersten Gleitstange 31 ist ein Sensor, bevorzugt ein optischer Sensor, zum Beispiel eine Kamera, angeordnet, der das Auftreffen bzw. Annähern des ersten Kleiderbügels 1' an den Heber 37 detektiert.

Von einer Steuereinrichtung der Vorrichtung 30 wird nach Detektion des ersten Kleiderbügels 1' der Heber 37 durch Betätigung des weiteren Pneumatikzylinders 38 angehoben.

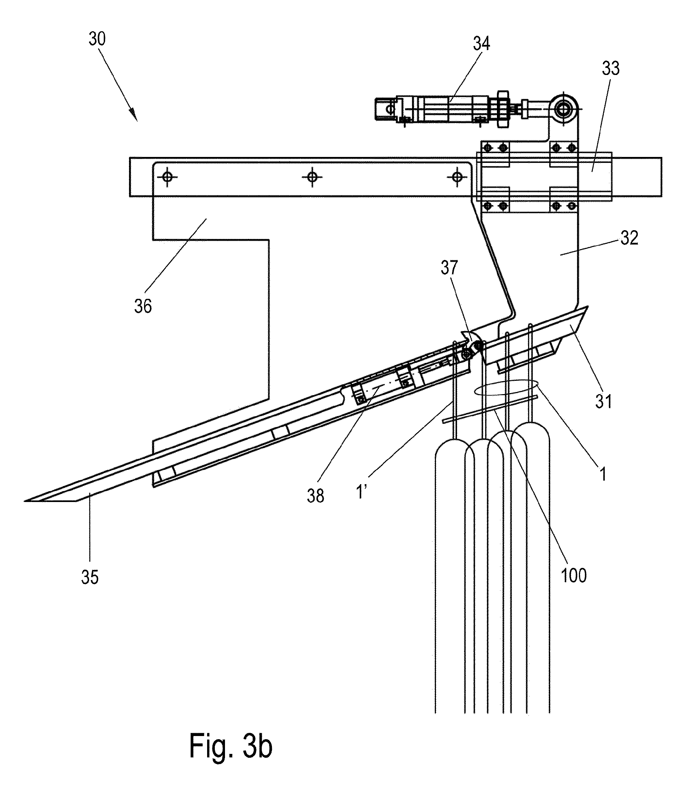

Der sich dann einstellende Zustand ist in Fig. 3b dargestellt. Durch den Heber 37 ist der erste Kleiderbügel 1' von der ersten Gleitstange 31 auf die zweite Gleitstange 35 angehoben. Die weiteren Kleiderbügel 1 befinden sich noch auf der ersten Gleitstange 31.

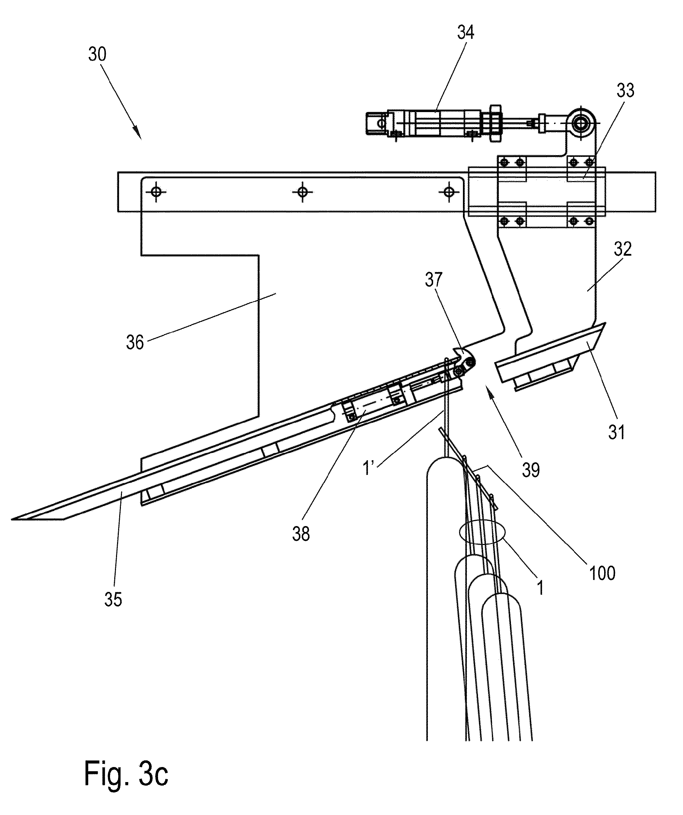

Anschließend wird durch Betätigung des Pneumatikzylinders 34 die erste Gleitstange 31 von der zweiten Gleitstange 35 wegbewegt. Dieses ist in Fig. 3c dargestellt. Durch die Bewegung der ersten Gleitstange 31 entsteht zwischen beiden Gleitstangen 31, 35 ein Spalt 39. In diesen Spalt rutschen die weiteren Kleiderbügel 1, die somit gegenüber dem nach wie vor gehaltenen Kleiderbügel 1' gewissermaßen fallengelassen werden.

Durch das Freigeben der weiteren Kleiderbügel 1 rutscht die Verbindungsklammer 100 an dem Halsabschnitt des ersten Kleiderbügels 1' herunter und verkippt um eine Drehachse, die senkrecht zur Zeichnungsebene der Fig.3c verläuft. Diese Verkippung ist durch die längliche Ausbildung der ersten Aussparung 101' möglich. Die weiteren Kleiderbügel 1 rutschen mit ihren Halsabschnitten durch die weiteren Aussparungen 101 der Verbindungsklammer 100, bis sie durch ihre Hakenabschnitte in den weiteren Aussparungen101 gefangen werden. Durch die Verkippung der Verbindungsklammer 100 werden die Kleiderbügel 1,1' und somit auch die von ihnen getragenen Kleidungsstücke 2 zueinander näher angeordnet und flach aufeinander gelegt. In Bewegungsrichtung der Gruppe der Kleiderbügel 1 nimmt die Anordnung aus Kleiderbügeln 1, 1' und Kleidungsstücken 2 damit einen geringeren Raum ein.

Wie Fig. 2a zeigt, sind am Umfang der Aussparungen 101, 101' Auskerbungen 105, 105' und 106 vorgesehen. Die Auskerbungen 105 sind dabei auf der Oberseite der Verbindungsklammer 100 an der in der Fig. 2a jeweils unteren linken Ecke der Aussparung 101 ausgebildet, wohingegen die Auskerbungen 106 an der Unterseite der Verbindungsklammer 100 in der jeweils linken oberen Ecke der Aussparung 101 angeordnet sind. Diese paarweisen Auskerbungen 105, 106 ermöglichen es, dass ein durch die Aussparungen 101 verlaufender Hakenabschnitt eines Kleiderbügels sich nicht senkrecht zur Ebene der Verbindungsklammer 100 stellt, sondern sich in der kaskadenartigen Anordnung der Kleiderbügel nahezu parallel zu der Ebene der Verbindungsklammer 100 ausrichten kann.

Bei der ersten Aussparung 101' ist ebenfalls eine Auskerbung 105' auf der Oberseite der Verbindungsklammer 10 ausgebildet. In dieser Auskerbung 105' legt sich der Hals des ersten Bügels 1', sodass bei gegebener Länge der Aussparung 101' ein möglichst großer Verkippungswinkel der Verbindungsklammer 100 in der kaskadenartige Anordnung erzielt werden kann.

Bedingt durch die unterschiedliche Form der ersten Aussparung 101' und der weiteren Aussparungen 101 sowie der Seiten und Ausrichtungen, in der die Auskerbungen 105, 106 und 105' angeordnet sind, ist eine korrekte Ausrichtung der Verbindungsklammer 100 beim Aufsetzen auf die Gruppe von Kleiderbügeln 1, 1' erforderlich. Um auch bei einem maschinellen Aufsetzen der Verbindungsklammer 100 die korrekte Ausrichtung zu gewährleisten, ist an einer der Querseiten eine Orientierungskerbe 107 ausgebildet, die ein korrektes Einlegen von Verbindungsklammern 100 in beispielsweise das Magazin 23 der Gruppierungseinrichtung 20 sicherstellen.

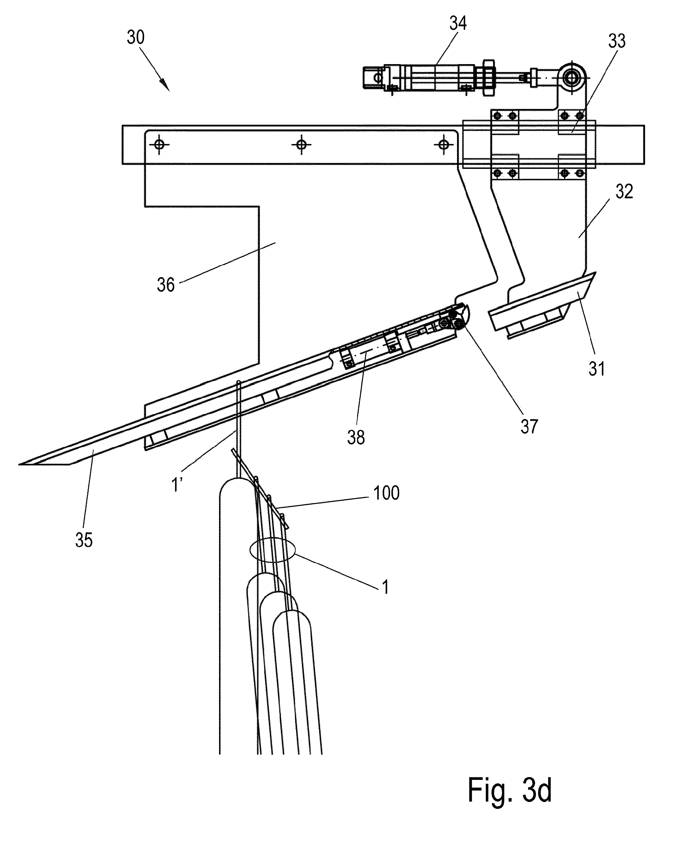

Fig.3d zeigt schließlich, wie die Gruppe der Kleiderbügel 1, 1' nachfolgend getragen nur über den ersten Kleiderbügel 1' auf der zweiten Gleitstange 35 hinabrutscht und die Vorrichtung 30 verlässt. Um den in Fig. 3a dargestellten Anfangszustand wieder einzunehmen, wird (wie bereits in Fig. 3b gezeigt) der Heber 37 wieder abgesenkt und die erste Gleitstange 31 wieder an die zweite Gleitstange 35 verfahren. Die Vorrichtung 30 ist damit bereit zur Entgegennahme einer weiteren Gruppe von Kleiderbügeln 1, 1'.

### Bezugszeichen

- 1: Kleiderbügel
- 2: Kleidungsstück

- 10: Zuführungseinrichtung
- 11: Führungsbahn
- 12: Rollenträger

- 20: Gruppierungseinrichtung
- 21: Führungsbahn
- 22: Applikator für Verbindungsklammer
- 23: Magazin für Verbindungsklammer

- 30: Vorrichtung zum platzsparenden Anordnen
- 31: erste Gleitstange
- 32: verschiebbare Trägerplatte
- 33: Führung
- 34: Pneumatikzylinder
- 35: zweite Gleitstange
- 36: Trägerplatte
- 37: Heber
- 38: Pneumatikzylinder
- 39: Spalt

- 100: Verbindungsklammer
- 101, 101': Aussparung
- 102: Kanal
- 103: trichterförmige Aufweitung
- 104: Widerhaken
- 105: Auskerbung
- 106: rückseitige Auskerbung
- 107: Orientierungskerbe

## Patentansprüche

1. Vorrichtung (30) zum platzsparenden Anordnen einer Gruppe von Kleiderbügeln zur Aufnahme von hängend lagernden Kleidungsstücken, wobei die Kleiderbügel (1, 1') mit einer Verbindungsklammer (100) zusammengefasst sind, aufweisend
- eine erste Gleitstange (31) zum Zuführen der Gruppe von Kleiderbügeln (1, 1') auf, wobei jeder der Kleiderbügel (1, 1') mit einem Hakenabschnitt auf der ersten Gleitstange (31) geführt ist;
- eine sich an die erste Gleitstange (31) anschließende zweite Gleitstange (35) zum Abführen der Gruppe der Kleiderbügel (1, 1'),
wobei
- zumindest eine der Gleitstangen (31, 35) relativ zur anderen der Gleitstangen (31, 35) bewegbar gelagert, so dass ein Spalt (39) zwischen der ersten Gleitstange (31) und der zweiten Gleitstange (35) gebildet werden kann, und
- die Vorrichtung (30) dazu eingerichtet ist, von der Gruppe von Kleiderbügeln (1, 1') einen ersten Kleiderbügel (1') von der ersten Gleitstange (31) auf die zweite Gleitstange (35) zu überführen und die weiteren Kleiderbügel (1) der Gruppe in den Spalt (39) zwischen der ersten und der zweiten Gleitstange (31, 35) freizugeben.

2. Vorrichtung (30) nach Anspruch 1, bei der die erste Gleitstange (31) gegenüber der zweiten Gleitstange (35) bewegbar, insbesondere verschiebbar ist.

3. Vorrichtung (30) nach Anspruch 2, bei der die erste Gleitstange (31) mit einem Pneumatikzylinder (34) gekoppelt ist.

4. Vorrichtung (30) nach einem der Ansprüche 1 bis 3, bei der am Übergang zwischen der ersten und der zweiten Gleitstange (31, 35) eine Stufe vorgesehen ist, wobei zwischen den Gleitstangen (31, 35) ein Heber (37) angeordnet ist, um den Kleiderbügel (1') von der ersten Gleitstange (31) auf die zweite Gleitstange (35) zu heben.

5. Vorrichtung (30) nach Anspruch 4, bei der der Heber (37) ein von einem Aktor, bevorzugt einem weiteren Pneumatikzylinder (38) bewegbarer Haken ist.

6. Vorrichtung (30) nach Anspruch 4 oder 5, bei der ein Sensor vorgesehen ist, um ein Anliegen oder Annähern des ersten Kleiderbügels (1') an dem Heber zu detektieren.

7. Vorrichtung (30) nach Anspruch 6, aufweisend eine Steuereinrichtung, die den Sensor auswertet und eine Bewegung des Hebers (37) und eine Bildung des Spalts (39) koordiniert.

8. Vorrichtung nach Anspruch 7, bei der die Steuereinrichtung den mit der Gleitstange (31) gekoppelten Pneumatikzylinder (34) und den mit dem Heber gekoppelten weiteren Pneumatikzylinder (38) über Ventile ansteuert.

9. Vorrichtung (30) nach einem der Ansprüche 1 bis 8, bei der die erste und/oder die zweite Gleitstange (31, 35) horizontal geneigt verlaufen.
